# EUROPÄISCHE PATENTSCHRIFT

(11) **EP 0 937 788 B1**
(45) Veröffentlichungstag und Bekanntmachung des Hinweises auf die Patenterteilung: **20.11.2002**
(21) Anmeldenummer: 98204500.7
(22) Anmeldetag: 03.07.1998
(51) Int. Cl.: C23F 13/00, C02F 1/46, F24D 19/00

(54) **Vorrichtung zum Schutz metallischer Oberflächen beispielsweise von Gasbrennern gegen Korrosion und/oder Verkalkung**
Apparatus for protection of metal surfaces ,for example gas burners, against corrosion and/or calcification
Dispositif pour la protection des surfaces métalliques par example des brûleurs à gaz contre la corrosion et/ou l'entartrage

(30) Priorität: 03.07.1997 DE 19728396
(43) Veröffentlichungstag der Anmeldung: 25.08.1999
(73) Patentinhaber: ROBERT BOSCH GMBH, 70442 Stuttgart (DE)
(72) Erfinder: Bienzle, Marcus, Dr., 73760 Ostfildern (DE)

(56) Entgegenhaltungen:
- US-A- 5 643 424

## Beschreibung

### Stand der Technik

Die Erfindung betrifft eine Vorrichtung zum Schutz metallischer Oberflächen eines Gasheizgerätes gegen Korrosion, wobei die metallischen Oberflächen im Bereich des Abgastraktes angeordnet sind und an denen sich die im Abgas vorhandene Flüssigkeit in Form von Kondensat niederschlägt.

Aus der DE 195 45 039 C1 ist ein Verfahren bekannt, bei dem die metallischen Oberflächen eines Brauchwasserspeichers mittels einer Opferanode geschützt sind.

In der Verbindung mit dem als Elektrolyt dienenden Brauchwasser bildet sich ein galvanisches Element. Hierbei wird die Anode abgetragen und die metallischen Oberflächen von korrosiven Angriffen freigehalten.

Die Opferanode muß, da sie sich verbraucht, in Wartungsintervallen ausgetauscht werden. Dies verursacht aber hohe Kosten.

Bei Gasbrennern besteht die Problematik, daß die durch den Abgastrakt abgeführten Rauchgase mit Feuchtigkeit angereichert sind. Diese schlägt sich als Kondensat an den Wandungen des Abgaskanales ab. Beim Verbrennungsprozeß entstehen Verbrennungsrückstände, die im Kondenswasser in Lösung sind. Es bilden sich dadurch aggressive Säuren, die die metallischen Oberflächen des Abgaskanals angreifen.

Zum Schutz können die metallischen Oberflächen beschichtet werden. Dies ist jedoch nicht mit geringem Aufwand durchführbar.

### Vorteile der Erfindung

Es ist Aufgabe der Erfindung, eine Vorrichtung der eingangs erwähnten Art zu schaffen, mit der die metallischen Oberflächen auf einfache Weise gegen aggressive Fluide geschützt werden können.

Diese Aufgabe wird dadurch gelöst, daß an die metallischen Oberflächen eine Stromquelle angeschlossen ist, die Elektronen direkt in die metallischen Oberflächen einbringt.

Bei der Erfindung macht man sich die Erkenntnis zunutze, wonach Säuren Elektronen aus den metallischen Oberflächen herauslösen. Mit der Stromquelle wird der entstandene Elektronenmangel wieder ausgeglichen. Damit kann das elektrochemische Potential der metallischen Oberfläche verschoben werden, so daß kein Korrosions-Angriff mehr stattfindet.

Es lassen sich nicht nur Behälterwandungen oder die Wandungen von Führungskanälen schützen. Vielmehr ist es auch denkbar, daß auch sonstige Teile, die mit dem Fluid in Berührung kommen, an eine Stromquelle angekoppelt sind. Genannt seien hier beispielsweise Wärmetauscher, Strömungsleit-Einrichtungen etc..

Eine bevorzugte Ausgestaltung der Erfindung sieht dabei vor, daß alle in dem Führungskanal für das Abgas angeordneten, mit Kondensat in Berührung kommenden metallischen Oberflächen miteinander in elektrisch leitender Verbindung stehen.

Die Erfindung betrifft auch eine Vorrichtung zum Schutz eines Wärmetauschers eines Gasheizgerätes vor Verkalkung, wobei an metallischen Oberflächen des Wärmetauschers Kühlwasser vorbeigeleitet ist. Der Verkalkungsschutz wird im Einzelnen dadurch erreicht, daß an die metallischen Oberflächen eine Stromquelle angeschlossen ist, die Elektronen direkt in die metallische Oberfläche einbringt. Mittels des Elektroneneintrages wird die metallische Oberfläche auf ein elektrisches Potential gehoben, welches die Anhaftung der negativ geladenen OH⁻-Gruppe des für die Verkalkung verantwortlichen Kalziumcarbonats an der metallischen Oberfläche zuverlässig verhindert.

Bevorzugterweise ist es dabei vorgesehen, daß der Wärmetauscher in dem Führungskanal für das Abgas in unmittelbarer Zuordnung zu dem Brenner angeordnet ist, und daß sowohl die, in den Führungskanal weisende metallische Oberfläche, als auch die mit dem Kühlwasser benetzte metallische Oberfläche des Wärmetauschers an eine gemeinsame Stromquelle angeschlossen sind. Gerade bei Wärmetauschern von Gasheizgeräten, die dem Brenner des Gasheizgerätes zugeordnet, also in unmittelbarere Nähe des Ortes der Wärmeentstehung befestigt sind, entstehen vorwiegend Kalkablagerungen. Infolge der hohen Termperaturbelastungen fällt hier bevorzugt das, als temporäre Härte bezeichnete Kalziumcarbonat aus dem Wasser aus. Mit der Erfindung läßt sich nun die Anhaftung des Kalziumcarbonates an den heißen Wandungen des Wärmetauscher einfach verhindern. Da gleichzeitig auch die dem Abgas zugewandte Oberfläche des Wärmetauschers gegen den korrosiven Angriff des Kondenswassers geschützt ist, wird eine erhebliche Steigerung der Standzeit des Wärmetauschers erreicht.

Ein einfacher Aufbau für die erfindungsgemäße Vorrichtung ergibt sich dann, wenn vorgesehen ist, daß die Stromquelle mit ihren beiden Polen an der (den) zu schützenden metallischen Oberfläche(-n) kontaktiert ist, und daß in dem Stromkreis ein ohmscher Verbraucher eingekoppelt ist.

Dabei kann es dann auch insbesondere vorgesehen sein, daß der ohmsche Verbraucher eine Anzeigeeinheit aufweist, die das Vorhandensein des Stromflusses darstellt.

Um eine Unabängigkeit von externen Stromversorgern zu ermöglichen, ist es denkbar, daß im Bereich des Brenners des Gasheizgerätes, an oder in dem ein Brenngas verbrannt wird, die Stromquelle angeordnet ist, und daß die Stromquelle Strahlungs- oder Wärmeenergie vom Brenner absorbiert und in Strom umwandelt. Die dem Brenner zugeordnete Stromquelle liefert immer dann den erforderlichen Strom zum Korrosions-/Verkalkungsschutz, wenn das Gasheizgerät in Betrieb ist. Dann ist auch überwiegend der korrodierende Angriff auf die metallischen Oberflächen zu erwarten.

Eine Erfindungsvariante kann dadurch gekennzeichnet sein, daß mit der Stromquelle eine Steuerschaltung verbunden ist, die das elektrische Potential der metallischen Oberfläche mit einem Soll-Wert vergleicht und die die Stromquelle in Abhängigkeit von einem Ist-Soll-Vergleich steuert.

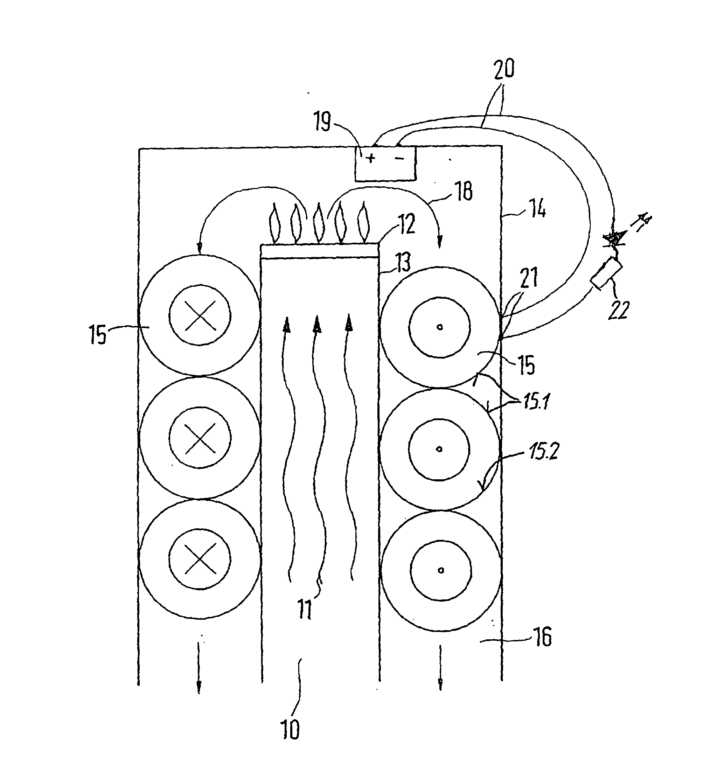

Die Erfindung wird im Folgenden anhand eines Ausführungsbeispieles, das in der Zeichnung dargestellt ist, näher erläutert.

Die Zeichnung zeigt in Seitenansicht und im Schnitt eine schematische Darstellung einer Wärmezelle eines Gasbrenners. Die Wärmezelle besitzt einen Brenngaskanal 10 über den Brenngas 11 einem Brenner 12 zugeleitet ist. Die von dem Brenner 12 abgehenden heißen Abgase 18 sind in Führungskanäle 16 eingeleitet. In den Führungskanälen 16 sind Wärmetauscher 15 angeordnet. Die Wärmetauscher 15 können Kupferrohre sein, in denen Wasser zirkuliert. Nach dem Durchtritt durch die Führungskanäle 16 wird das Abgas aus der Wärmezelle ausgeleitet.

Der Führungskanal 16 wird von inneren und äußeren Wandungen begrenzt, die metallische Oberflächen 13,14 aufweisen.

Im Bereich oberhalb des Brenners 12 ist eine Stromquelle 19 angeordnet. Hierbei handelt es sich um eine Photozelle, die Strahlungsenergie vom Brenner 12 aufnimmt und in Strom umwandelt. Von dem Minuspol und dem Pluspol der Stromquelle 19 gehen Leitungen 20 ab, mit denen die metallische Oberfläche 14 der äußeren Wandung verbunden ist. Die metallische Oberfläche 15.1 des Wärmetauschers 15, die dem Führungskanal 16 zugewandt ist, steht in elektrisch leitendem Kontakt mit den metallischen Oberflächen 13, 14 der inneren als auch der äußeren Wandung des Führungskanales 16. In die Leitung 20 die den Pluspol der Stromquelle 19 mit der metallischen Oberfläche 14 verbindet, sind ein ohmischer Widerstand und eine Leuchtdiode eingekoppelt.

Im Betrieb des. Gasbrenners wird das Brenngas 11 durch den Brenngaskanal 10 geleitet. Es gelangt zu dem Brenner 12, wo es unter Wärmeentwicklung verbrannt wird. Die heißen Abgase 18, die den Brenner 12 verlassen, sind mit Feuchtigkeit angereichert. Beim Durchtritt durch den Führungskanal 16 schlägt sich diese Feuchtigkeit als Kondensat auf den metallischen Oberflächen 15.1 der Wärmetauscher 15 und den metallischen Obeflächen 13,14 der inneren und äußeren Wandungen ab. Das Kondensat ist eine Säure, die Elektronen aus den metallischen Oberflächen 13,14 (beziehungsweise der metallischen Oberfläche 15.1 der Wärmetauscher 15) herauslöst. Diese herausgelösten Elektronen werden durch die Stromquelle 19 ersetzt. Über die Leitungen 20 werden die Elektronen den metallischen Oberflächen 13,14, 15.1 wieder zugeführt. Damit ändert sich die Materialbeschaffenheit der metallischen Oberflächen 13, 14, 15.1 nicht.

Der ohmsche Widerstand 22, der in den Stromkreis eingekoppelt ist, bewirkt einen Spannungsabfall um eine Kurzschlußbildung zu verhindern. Alternativ könnte zu diesem Zweck auch eine Stromquelle 19 verwendet werden, die einen ausreichend großen Innenwiderstand aufweist. Die in Reihe mit dem ohmschen Widerstand geschaltene Leuchtdiode dient als Anzeigevorrichtung. Über sie kann eine Überwachung der Funktion der Korrosionsschutz-Vorrichtung erfolgen.

Weiterhin ist mit der Erfindung auch verhindert, daß sich Kalkablagerungen an den inneren metallischen Oberflächen 15.2 des Wärmetauschers 15 ablagern. Dies wird im Einzelnen durch folgende Vorgänge bewirkt: Infolge der starken Erwärmung des im Wärmetauschers 15 zirkulierenden Wassers wird das, als temporäre Härte bekannte Kalziumcarbonat ausgefällt. Aufgrund seines elektrochemischen Potentials ist dieses Kalziumcarbonat bestrebt, sich an den erwärmten Oberflächen 15.2 des Wärmetauschers 15 abzulagern. Über die Stromquelle wird aber nunmehr das elektrochemische Potential der Oberflächen 15.2 derart verschoben, daß die OH-Gruppen des Kalziumcarbonats, die sich üblicherweise an die metallische Oberfläche 15.2 anheften, abgestoßen werden. Auf diese Weise kann der Wärmetauscher 15 auf einfache Weise mit nur einer Stromquelle 19 gegen Verkalkung und auch gleichzeitig an seinen äußeren metallischen Oberflächen 15.1 gegen Korrosion geschützt werden.

Aus den vorbeschriebenen Zusammenhängen wird deutlich, daß auch nur einzelne Bauteile der Wärmezelle gezielt geschützt werden können. So ist es beispielsweise möglich, die Stromquelle 19 alleine mit der metallischen Oberfläche der äußeren Wandung 14, der inneren Wandung 13 oder des Wärmetauschers 15 (15.1) zu kontaktieren.

## Patentansprüche

1. Vorrichtung zum Schutz metallischer Oberflächen eines Gasheizgerätes gegen Korrosion, wobei die metallischen Oberflächen im Bereich des Abgastraktes angeordnet sind und an denen sich die im Abgas vorhandene Flüssigkeit in Form von Kondensat niederschlägt,
**dadurch gekennzeichnet,**
**daß** an die metallischen Oberflächen (13, 14, 15.1) eine Stromquelle (19) angeschlossen ist, die Elektronen direkt in die metallischen Oberflächen (13, 14, 15.1) einbringt.

2. Vorrichtung nach Anspruch 1,
**dadurch gekennzeichnet,**
**daß** die metallische Oberfläche (15.1) eines im Abgasstrom angeordneten Wärmetauschers (15) an die Stromquelle (19) angeschlossen ist.

3. Vorrichtung nach Anspruch 2,
**dadurch gekennzeichnet,**
**daß** alle in dem Führungskanal (16) für das Abgas angeordneten, mit Kondensat in Berührung kommenden metallischen Oberflächen (13, 14, 15.1) miteinander in elektrisch leitender Verbindung stehen.

4. Vorrichtung zum Schutz eines Wärmetauschers eines Gasheizgerätes vor Verkalkung, wobei an metallische Oberflächen des Wärmetauschers Kühlwasser vorbeigeleitet ist,
**dadurch gekennzeichnet,**
**daß** an die metallischen Oberflächen (15.2) eine Stromquelle (19) angeschlossen ist, die Elektronen direkt in die metallische Oberfläche (15.2) einbringt.

5. Vorrichtung nach Anspruch 4,
**dadurch gekennzeichnet,**
**daß** der Wärmetauscher (15) in dem Führungskanal (16) für das Abgas in unmittelbarer Zuordnung zu dem Brenner (12) angeordnet ist, und
**daß** sowohl die, in den Führungskanal (16) weisende metallische Oberfläche (15.1), als auch die mit dem Kühlwasser benetzte metallische Oberfläche (15.2) des Wärmetauschers (15) an eine gemeinsame Stromquelle (19) angeschlossen sind.

6. Vorrichtung nach einem der Ansprüche 1 bis 5,
**dadurch gekennzeichnet,**
**daß** die Stromquelle (19) mit ihren beiden Polen an der (den) zu schützenden metallischen Oberfläche(-n) (13, 14, 15.1) kontaktiert ist, und
**daß** in dem Stromkreis ein ohmscher Verbraucher (22) eingekoppelt ist.

7. Vorrichtung nach Anspruch 6,
**dadurch gekennzeichnet, daß** der ohmsche Verbraucher (22) eine Anzeigeeinheit aufweist, die das Vorhandensein des Stromflusses darstellt.

8. Vorrichtung nach einem der Ansprüche 1 bis 7,
**dadurch gekennzeichnet,**
**daß** im Bereich eines Brenners (12) des Gasheizgerätes, an oder in dem ein Brenngas (11) verbrannt wird, die Stromquelle (19) angeordnet ist, und
**daß** die Stromquelle (19) Strahlungs- oder Wärmeenergie vom Brenner (12) absorbiert und in Strom umwandelt.

9. Vorrichtung nach einem der Ansprüche 1 bis 8,
**dadurch gekennzeichnet,**
**daß** mit der Stromquelle (19) eine Steuerschaltung verbunden ist, die das elektrische Potential der metallischen Oberfläche (13, 14) mit einem Sollwert vergleicht und die die Stromquelle (19) in Abhängigkeit von einem Ist-Soll-Vergleich steuert.

## Claims

1. Device for protecting metallic surfaces of a gas heater against corrosion, the metallic surfaces being arranged in the region of the off-gas section and the liquid which is present in the off-gas being deposited on these surfaces in the form of condensate,
**characterized in that**
a current source (19), which introduces electrons directly into the metallic surfaces (13, 14, 15.1), is connected to the metallic surfaces (13, 14, 15.1).

2. Device according to Claim 1,
**characterized in that**
the metallic surface (15.1) of a heat exchanger (15) arranged in the off-gas flow is connected to the current source (19).

3. Device according to Claim 2,
**characterized in that**
all the metallic surfaces (13, 14, 15.1) which are arranged in the guide duct (16) for the off-gas and come into contact with condensate are electrically conductively connected to one another.

4. Device for protecting a heat exchanger of a gas heater from calcification, cooling water being guided past metallic surfaces of the heat exchanger,
**characterized in that**
a current source (19), which introduces electrons directly into the metallic surface (15.2), is connected to the metallic surfaces (15.2).

5. Device according to Claim 4,
**characterized in that**
the heat exchanger (15) is arranged in the guide duct for the off-gas, in the immediate vicinity of the burner (12), and **in that** both the metallic surface (15.1) which faces into the guide duct (16) and the metallic surface (15.2) of the heat exchanger (15) which is wetted with the cooling water are connected to a common current source (19).

6. Device according to one of Claims 1 to 5,
**characterized in that**
the two poles of the current source (19) are in contact with the metallic surface(s) (13, 14, 15.1) which is/are to be protected, and **in that** a resistive load (22) is incorporated in the electric circuit.

7. Device according to Claim 6,
**characterized in that**
the resistive load (22) has a display unit which indicates that the flow of current is present.

8. Device according to one of Claims 1 to 7,
**characterized in that**
the current source (19) is arranged in the region of a burner (12) of the gas heater on or in which a fuel gas (11) is burned, and **in that** the current source (19) absorbs radiant or thermal energy from the burner (12) and converts it into current.

9. Device according to one of Claims 1 to 8,
**characterized in that**
a control circuit is connected to the current source (19), which control circuit compares the electric potential of the metallic surface (13, 14) with a desired value and controls the current source (19) as a function of an actual/desired comparison.

## Revendications

1. Dispositif de protection contre la corrosion des surfaces métalliques d'un appareil de chauffage au gaz, dans lequel les surfaces métalliques se trouvent au niveau des conduits de fumées, et l'humidité contenue dans les fumées se dépose sous la forme de condensat,
**caractérisé en ce que**
on relie une source de courant (19) aux surfaces métalliques (13, 14, 15.1) pour introduire directement des électrons dans la surface métallique (13, 14, 15.1).

2. Dispositif selon la revendication 1,
**caractérisé en ce que**
la source de courant (19) est reliée à la surface métallique (15.1) d'un échangeur de chaleur (15) monté dans la veine des gaz de combustion.

3. Dispositif selon la revendication 2,
**caractérisé en ce que**
toutes les surfaces métalliques (13, 14, 15.1) arrivant en contact avec le condensat dans le canal du guidage (16) des fumées sont reliées électriquement.

4. Dispositif de protection contre l'entartrage dans l'échangeur de chaleur d'un appareil de chauffage au gaz, dans lequel de l'eau de refroidissement passe sur les surfaces métalliques de l'échangeur de chaleur,
**caractérisé en ce que**
les surfaces métalliques (15.2) sont reliées à une source de courant (19) qui introduit des électrons directement dans la couche métallique 15.2).

5. Dispositif de protection selon la revendication 4,
**caractérisé en ce que**
l'échangeur de chaleur (15) est installé dans le canal de guidage (16) des fumées, au voisinage direct du brûleur (12), et aussi bien la surface métallique (15.1) tournée vers le canal de guidage (16) que la surface métallique (15.2) mouillée par l'eau de refroidissement dans l'échangeur de chaleur (15) sont reliées à une source de courant commune (19).

6. Dispositif de protection selon l'une des revendications 1 à 5,
**caractérisé en ce que**
la source de courant (19) est mise en contact par ses deux pôles avec la où les surfaces métalliques à protéger (13, 14, 15.1) et un consommateur ohmique (22) est couplé dans le circuit électrique.

7. Dispositif contre la corrosion selon la revendication 6,
**caractérisé en ce que**
le consommateur ohmique (22) comporte un élément d'affichage indiquant la présence d'un passage de courant.

8. Dispositif contre la corrosion selon l'une des revendications 1 à 7,
**caractérisée en ce qu'**
au niveau d'un brûleur (12) de l'appareil de chauffage au gaz, dans la zone où brûle le gaz (11), on installe la source de courant (19) qui absorbe l'énergie de rayonnement ou énergie thermique du brûleur (12) pour transformer cette énergie en courant.

9. Dispositif contre la corrosion selon l'une des revendications 1 à 8,
**caractérisé en ce qu'**
on relie à la source de courant (19) un circuit de commande qui compare le potentiel électrique de la surface métallique (13, 14) à une valeur de consigne et commande la source de courant (19) en fonction de cette comparaison aux valeurs de consigne/valeurs réelles.
